(19) **Europäisches Patentamt** / **European Patent Office** / **Office européen des brevets**

(11) **EP 1 362 216 B1**

(12) # EUROPÄISCHE PATENTSCHRIFT

(45) Veröffentlichungstag und Bekanntmachung des Hinweises auf die Patenterteilung:
**22.06.2011 Patentblatt 2011/25**

(21) Anmeldenummer: **02722132.4**

(22) Anmeldetag: **25.02.2002**

(51) Int Cl.:
***G01B 11/03*** (2006.01)  ***G01B 7/012*** (2006.01)
***G01B 5/016*** (2006.01)

(86) Internationale Anmeldenummer:
**PCT/EP2002/001958**

(87) Internationale Veröffentlichungsnummer:
**WO 2002/068904 (06.09.2002 Gazette 2002/36)**

(54) **KOORDINATENMESSGERÄT MIT EINEM TASTKOPF ZUM ANTASTEN EINES WERKSTÜCKS**

CO-ORDINATE MEASURING DEVICE HAVING A PROBEHEAD FOR PROBING A WORKPLACE

APPAREIL DE MESURE DE COORDONNEES AVEC UN TETE DE PALPAGE POUR LE PALPAGE D'UNE PIECE A USINER

(84) Benannte Vertragsstaaten:
**CH DE FR GB IT LI**

(30) Priorität: **23.02.2001 DE 10108774**

(43) Veröffentlichungstag der Anmeldung:
**19.11.2003 Patentblatt 2003/47**

(73) Patentinhaber: **Carl Zeiss Industrielle Messtechnik GmbH**
**73447 Oberkochen (DE)**

(72) Erfinder:
• **ROTH, Roland**
  **73550 Waldstetten (DE)**
• **SEITZ, Karl**
  **73447 Oberkochen (DE)**
• **BRENNER, Kurt**
  **74589 Satteldorf (DE)**
• **BRAND, Uwe**
  **30916 Isernhagen (DE)**
• **HOFFMANN, Wolfgang**
  **38467 Bergfeld (DE)**
• **KLEINE-BESTEN, Thomas**
  **38116 Braunschweig (DE)**

• **BÜTEFISCH, Sebastian**
  **10829 Berlin (DE)**
• **BÜTTGENBACH, Stephanus**
  **38173 Sickte (DE)**

(74) Vertreter: **Schorr, Frank Jürgen et al**
**Diehl & Partner GbR**
**Augustenstrasse 46**
**80333 München (DE)**

(56) Entgegenhaltungen:
**EP-A- 0 995 967     DE-A1- 3 238 951**
**DE-A1- 3 238 951     US-A- 4 530 159**
**US-A- 5 615 489**

• **KLEINE-BESTEN T ET AL: "MINIATURISIERTER 3D-TASTSENSOR FUER DIE METROLOGIE AN MIKROSTRUKTUREN 3D PROBE FOR DIMENSIONAL METROLOGY ON MICROSYSTEM COMPONENTS" TECHNISCHES MESSEN TM, R.OLDENBOURG VERLAG. MUNCHEN, DE, Bd. 66, Nr. 12, Dezember 1999 (1999-12), Seiten 490-495, XP000927939 ISSN: 0171-8096**

EP 1 362 216 B1

**Beschreibung**

Die Erfindung betrifft ein Koordinatenmeßgerät mit einem Taststift zum Antasten eines Werkstücks. Ferner betrifft die Erfindung einen Tastkopf für ein Koordinatenmeßgerät, wobei der Tastkopf zur Halterung des Taststiftes und zur Registrierung eines Kontakts zwischen Taststift und Werkstück vorgesehen ist. Ferner betrifft die Erfindung ein Verfahren zum Antasten eines Werkstücks mittels eines Koordinatenmeßgerätes.

Herkömmliche Koordinatenmeßgeräte weisen eine Werkstückhalterung zur Anbringung eines zu vermessenden bzw. anzutastenden Werkstücks und einen bezüglich der Werkstückhalterung räumlich verfahrbaren Tastkopf auf. An dem Tastkopf ist ein Taststift in einer Ruhelage bezüglich des Tastkopfes gehalten, wobei der Tastkopf Auslenkungen des Taststiftes aus seiner Ruhelage registiert. Zur Bestimmung von Koordinaten einer Oberfläche des Werkstücks wird der Tastkopf bezüglich der Werkstückhalterung räumlich verfahren, bis eine Spitze des Taststiftes mit der Oberfläche des Werkstücks in Berührungskontakt kommt. Hierzu wird die Spitze des Taststiftes so lange auf die Oberfläche des Werkstücks zubewegt, bis die Berührung des Werkstücks durch die Tastspitze von dem Tastkopf über eine Auslenkung der Tastspitze aus ihrer Ruhelage registriert wird. Sodann werden die Relativposition des Tastkopfes bezüglich der Werkstückhalterung und damit die Koordinaten der Werkstückoberfläche in einem wählbaren Koordinatensystem ermittelt. Es können auf ähnliche Weise weitere Koordinaten von Oberflächenpunkten des Werkstücks ermittelt werden.

Im Hinblick auf eine schnelle Abtastung der Werkstückoberflächen sollte eine Annäherung der Tastspitze an die Werkstückoberfläche durch eine schnelle Relativbewegung zwischen Tastkopf und Werkstückhalterung erfolgen. Allerdings muß diese Annäherung auch vorsichtig erfolgen, um zu vermeiden, daß Komponenten des Tastkopfes und der Tastspitze beschädigt werden, wenn die Bewegung des Tastkopfes relativ zu dem Werkstück beim Kontakt mit demselben nicht schnell genug gebremst werden kann.

Deshalb erfolgt die Annäherung der Tastspitze an das Werkstück unter Beobachtung eines Benutzers, der mit dem Auge die Annäherung der Tastspitze an das Werkstück registrieren und daraufhin die Annäherungsgeschwindigkeit verzögern kann. Ferner wählt der Benutzer auch mit dem Auge die Oberflächenteile bzw. Geometrieelemente des Werkstücks aus, welche aktuell angetastet werden sollen. Hierzu blickt der Benutzer bei herkömmlichen Koordinatenmeßgeräten mit seinem Auge unmittelbar auf die Tastspitze und das Werkstück.

Bei miniaturisierten Werkstücken und komplizierten Werkstückgeometrien ist die direkte Beobachtung von Tastspitze und Werkstückoberfläche für den Benutzer unter Umständen mühsam oder gar unmöglich.

Aus EP 0 614 517 B1 ist ein Koordinatenmeßgerät bekannt, bei dem der Benutzer nicht mit dem freien Auge auf Tastspitze und Werkstück blickt, sondern hierzu auf einen Monitor blickt, der ein Bild der Umgebung der Tastspitze darstellt. Zur Aufnahme des Monitorbildes trägt das Koordinatenmeßgerät neben dem Tastkopf eine Kamera mit einem Objektiv, welche relativ zueinander derart ausgerichtet sind, daß die Kamera ein Bild der Tastspitze und des Bereichs der Werkstückoberfläche liefert, an dem sich die Tastspitze annähert.

Desweiteren ist aus der Druckschrift EP 0 995 967 A ein Tastkopf für ein Koordinatenmessgerät bekannt. Dieser Tastkopf umfasst einen Taststift und eine Optik, welche an dem Taststift angebrachte Zielmarken auf einen Kamerachip abbildet. Aus den auf dem Kamerachip registrierten Orten der Bilder der Zielmarken sind die Koordinaten der Zielmarken und somit die Koordinaten der Spitze des Taststifts bestimmbar.

Der Artikel "Miniaturisierter 3D-Tastkopfsensor für die Metrologie an Mikrostrukturen" von Thomas Kleine-Besten et al., erschienen in "Technisches Messen" 12/99, S. 490 bis 495 bezieht sich auf einen Tastsensor, der aus einer Siliziummembran besteht.

Dokument DE 3238951 A1 bezieht sich auf einen Kraftaufnehmer, der ein Verformungselement, einen Außenkranz und Biegestege aufweist.

Es ist eine Aufgabe der Erfindung, einen Tastkopf vorzuschlagen, der eine zuverlässigere Messung ermöglicht.

Diese Aufgabe wird gelöst durch Bereitstellen eines Tastkopfes, eines Koordinatenmessgerätes und eines Verfahrens gemäß den unabhängigen Ansprüchen.

Demgemäß ist es ein Vorteil der vorliegenden Erfindung, ein Koordinatenmeßgerät mit einer Beobachtungsoptik zum Beobachten der Tastspitze zu erhalten, welches für weitere Anwendungsformen geeignet ist, und einen Tastkopf für ein solches Koordinatenmeßgerät zu erhalten.

Die Erfindung geht hierzu aus von einem Tastkopf mit einem Tastkopfchassis, welches eine tragende Struktur für Komponenten des Tastkopfes bildet und an dem Koordinatenmeßgerät fest anbringbar ist. Hierbei ist an dem Tastkopf ferner eine Taststifthalterung vorgesehen, an welcher ein Taststift zur Antastung des Werkstücks anbringbar ist und welche bezüglich des Tastkopfchassis aus einer Ruhelage auslenkbar ist. Zur Erfassung einer Auslenkung der Taststifthalterung bezüglich des Tastkopfchassis ist ein Auslenkungsmeßsystem vorgesehen, und um einem Benutzer die Beobachtung der Taststiftspitze oder/und einer Umgebung der Taststiftspitze sowie eine Annäherung der Taststiftspitze an das Werkstück zu ermöglichen, ist an dem Chassis ferner eine Beobachtungsoptik angebracht.

Der Erfindung liegt die Erkenntnis zugrunde, daß die Anbringung von Beobachtungsoptik und Tastkopf nebeneinander bei dem vorangehend beschriebenen herkömmlichen Koordinatenmeßgerät zu geometrischen Einschränkungen führt und insbesondere eine Miniaturisierung des Systems aus Tastkopf und Beobachtungsoptik erschwert. Der Erfindung liegt deshalb die Idee zugrunde, die Beobachtungsoptik in den Tastkopf zu integrieren, so daß die Beobachtungsoptik durch den Tastkopf "hindurchschaut".

Die Beobachtungsoptik'ist dabei so ausgelegt, daß sie auch eine Umgebung der Taststiftspitze abbildet. Hierbei weist der abgebildete Bereich in der Objektebene der Beobachtungsoptik einen Durchmesser auf, der größer ist als ein Durchmesser eines an der Tastspitze zur Berührung des Werkstücks vorgesehenen Berührkörpers. Der Durchmesser des abgebildeten Bereichs ist hierbei ein Vielfaches des Durchmessers des Berührkörpers, insbesondere mehr als ein Fünffaches, Zehnfaches oder stärker bevorzugt gar mehr als ein Zwanzigfaches hiervon.

Die Abbildungsoptik ist ferner derart ausgelegt, daß sie ein kontrastreiches Bild eines Werkstücks gewinnen kann, wenn dieses in die Nähe der Taststiftspitze gelangt. Gegebenenfalls ist hierzu auch eine Beleuchtungseinrichtung bereitzustellen, um das Werkstück in der Umgebung der Taststiftspitze zu beleuchten, wobei diese Beleuchtung auch durch die Beobachtungsoptik selbst hindurch erfolgen kann.

Insbesondere umfasst der Tastkopf einen Querträger, also eine tragende Komponente des Tastkopfes, welche sich quer zur Erstreckungsrichtung des Taststiftes erstreckt und im Strahlengang der Beobachtungsoptik liegt. Diese sich quer erstreckende tragende Komponente kann insbesondere in dem Kraftfluß zwischen der Taststifthalterung und dem Koordinatenmeßgerät und insbesondere in dem Kraftfluß zwischen Taststifthalterung und Chassis liegen und Teil der Taststifthalterung oder/und des Chassis oder/und einer weiteren zwischen Chassis und Taststifthalterung vorgesehenen Komponente sein.

Daß die sich quer erstreckende tragende Komponente im Strahlengang der Beobachtungsoptik angeordnet ist, bedeutet hier, daß Linien des geometrischen Strahlengangs zwischen einer Fokalebene der Beobachtungsoptik, in der beispielsweise die Taststiftspitze anordenbar ist, und einer Eintrittslinse der Beobachtungsoptik diese sich quer erstreckende Komponente schneiden. Es ist dieser Querträger somit prinzipiell dazu geeignet, die Bildebene der Beobachtungsoptik wenigstens teilweise zu verdecken. Um gleichwohl die gewünschte Beobachtungsmöglichkeit durch die Beobachtungsoptik zu gewährleisten, ist der Querträger deshalb wenigstens bereichsweise lichtdurchlässig ausgebildet.

Mittels der Beobachtungsoptik soll somit zum einen die Spitze des Taststiftes und zum anderen eine Umgebung derselben beobachtbar sein. Hierzu ist die Beobachtungsoptik auf eine Länge des Taststiftes, und damit beispielsweise auf einen Abstand zwischen dem Querträger und der Spitze des Taststiftes, abgestimmt, und zwar derart, daß die Spitze des Taststiftes in der Nähe einer Objektebene der Beobachtungsoptik liegt. Insbesondere ist dies dann der Fall, wenn für einen Betrag eines Verhältnisses von einem ersten Abstand D1 zwischen dem Querträger und der Objektebene zu einem zweiten Abstand D2 zwischen dem Querträger und der Spitze des Taststiftes in einem Bereich von 0,5 bis 2,0, vorzugsweise 0,75 bis 1,4 und weiter bevorzugt 0,85 bis 1,2 liegt.

Alternativ ist es hierzu vorzugsweise ebenfalls möglich, den Querträger mit einer oder mehreren Ausnehmungen derart zu versehen, daß seine tragende Funktion einerseits erhalten bleibt und andererseits ausreichend Durchtrittsmöglichkeiten für Strahlung zwischen der Objektebene und einer Eintrittslinse der Beobachtungsoptik geschaffen sind. Der Querträger weist hierzu mehrere Materialstreifen auf zwischen denen Lücken zum Lichtdurchtritt vorgesehen sind, der Querträger kann als ein Netz oder Gitter ausgebildet sein, er kann als perforierte Fläche ausgebildet sein, oder seine die tragende Funktion bereitstellenden Komponenten können so schmal ausgebildet sein, daß eine ausreichend große Fläche für den Lichtdurchtritt verbleibt.

Vorteilhafterweise fallen eine optische Hauptachse der Beobachtungsoptik und eine Längsachse des Taststiftes im wesentlichen zusammen. Die Blickrichtung des Benutzers auf das Werkstück ist damit gleich der Erstreckungsrichtung des Taststiftes.

Vorzugsweise liegt hierbei auch der Teil der Taststifthalterung, an welcher der Fuß des Taststiftes unmittelbar angebracht ist, auf oder nahe der Hauptachse der Beobachtungsoptik, wobei dann, gesehen in dieser Hauptachse, um den Fuß des Taststiftes herum eine ausreichende Fläche an Ausnehmungen bzw. transparenten Körpern vorgesehen ist, um den Blick auf die Tastspitze zu ermöglichen.

Der Querträger ist elastisch deformierbar und als eine Komponente ausgebildet, die die Grundkörper von Chassis und Taststifthalterung elastisch miteinander verbindet. Der Querträger kann dann dazu vorgesehen sein, die Ruhelage der Taststifthalterung bezüglich des Tastkopfchassis festzulegen und auch eine Rückstellkraft gegenüber Auslenkungen aus dieser Ruhelage bereitzustellen.

Im Hinblick auf eine Miniaturisierung der Anordnung und auf wohldefinierte Rückstellkräfte sind der Querträger und Komponenten des Tastkopfchassis und der Taststifthalterung integral aus einem Materialblock gefertigt.

Der Materialblock ist vorzugsweise ein Einkristall, beispielsweise aus Silizium, wobei vorteilhafterweise Ätztechniken zur Fertigung der gewünschten Gestalt der Komponenten eingesetzt werden.

Das Auslenkungsmeßsystem ist hierbei derart realisiert, daß es elastische Deformationen des Querträgers registriert. Hierzu sind vorzugsweise Dehnmeßstreifen vorgesehen, welche bereichsweise an dem Querträger oder/und Bereichen des Tastkopfchassis oder/und der Taststifthalterung vorgesehen sind, wobei die Meßstreifen auch in diese Komponenten integriert sein können.

Die Erfindung sieht ferner ein Koordinatenmeßgerät vor, welches den vorangehend beschriebenen Tastkopf aufweist, und weiter sieht die Erfindung ebenfalls ein Verfahren zum Antasten eines Werkstückes vor, bei dem einem Benutzer der Blick auf die Taststiftspitze bzw. das anzutastende Werkstück durch die in den Tastkopf integrierte Beobachtungsoptik ermöglicht wird.

Die Erfindung wird nachfolgend anhand von Zeichnungen näher erläutert. Hierbei zeigt:

Figur 1    eine schematische Darstellung eines Koordinatenmeßgerätes,

Figur 2    eine schematische Darstellung eines Tastkopfes des Koordinatenmeßgerätes der Figur 1 im Schnitt,

Figur 3    eine Darstellung des Tastkopfes der Figur 2, geschnitten entlang einer Linie III-III der Figur 2,

Figur 4    eine Ausführungsform eines Tastkopfes gemäß der Erfindung für das Koordinatenmeßgerät der Figur 1

Figur 5    eine Darstellung einer Komponente des Tastkopfes der Figur 4 in Draufsicht,

Figur 6    die in Figur 5 gezeigte Komponente in einer Schnittdarstellung entlang einer Linie VI-VI der Figur 5,

Figur 7    eine Darstellung der Komponente der Figuren 5 und 6 mit montiertem Taststift und Auslenkung aus der Ruhelage,

Figur 8    eine der Figur 7 entsprechende Darstellung mit ei- ner anderen Auslenkung aus der Ruhelage,

Figur 9    eine Variante der in Figur 5 dargestellten Kompo- nente,

Figur 10   eine weitere Variante der in Figur 5 dargestellten Komponente und

Figur 11   ein Detail der Figur 10.

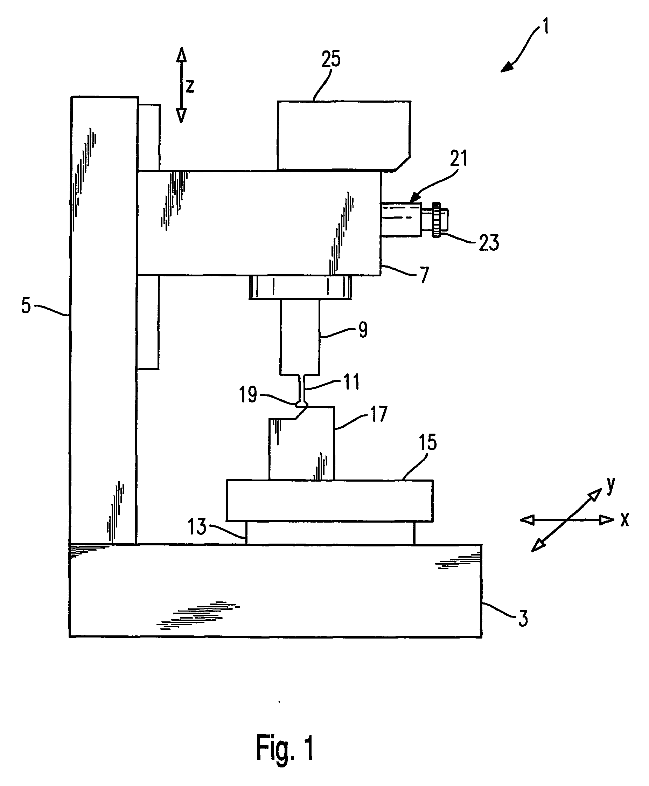

Die Figur 1 zeigt ein erfindungsgemäßes Koordinatenmeßgerät 1 mit einem Sockel 3 und einem daran angebrachten Stativ 5, an dem eine Tastkopfhalterung 7 in Vertikalrichtung (z-Richtung) verschiebbar gehalten ist. Die Tastkopfhalterung 7 trägt einen Tastkopf 9, an dem ein Taststift 11 gehalten ist. Auf dem Sockel 3 ist ein Verschiebetisch 13 vorgesehen, der eine Werkstückhalterung 15 in der Horizontalebene (x-Richtung, y-Richtung) verschiebbar trägt. Auf der Werkstückhalterung 15 ist ein Werkstück 17 angebracht, welches durch das Koordinatenmeßgerät 1 vermessen werden soll. Hierzu verfährt ein Benutzer den Tastkopf 9 so lange, bis eine Spitze 19 des Taststiftes 11 in Kontakt mit einer gewünschten Stelle auf der Oberfläche des Werkstücks 17 gelangt. Sobald die Taststiftspitze 19 in Kontakt mit dem Werkstück 17 gelangt, wird der Taststift 11 aus seiner Ruhelage an dem Tastkopf ausgelenkt, und diese Auslenkung wird von dem Koordinatenmeßgerät registriert, worauf es die Koordinaten x, y, z des Berührpunktes zwischen Werkstück 17 und Taststiftspitze 19 registriert.

Um eine vorsichtige Annäherung der Taststiftspitze 19 an das Werkstück 17 durchzuführen und eine Beschädigung des Taststiftes 11 bei der Annäherung an das Werkstück 17 zu vermeiden, beobachtet der Benutzer die Tastspitze 19 während der Annäherung oder in Pausen zwischen Annäherungsschritten durch eine Beobachtungsoptik 21, von der Komponenten in dem Tastkopf 9 angeordnet und in Figur 1 nicht dargestellt sind. In Figur 1 dargestellt ist ein Okular 23 der Beobachtungsoptik sowie eine Kamera 25 derselben.

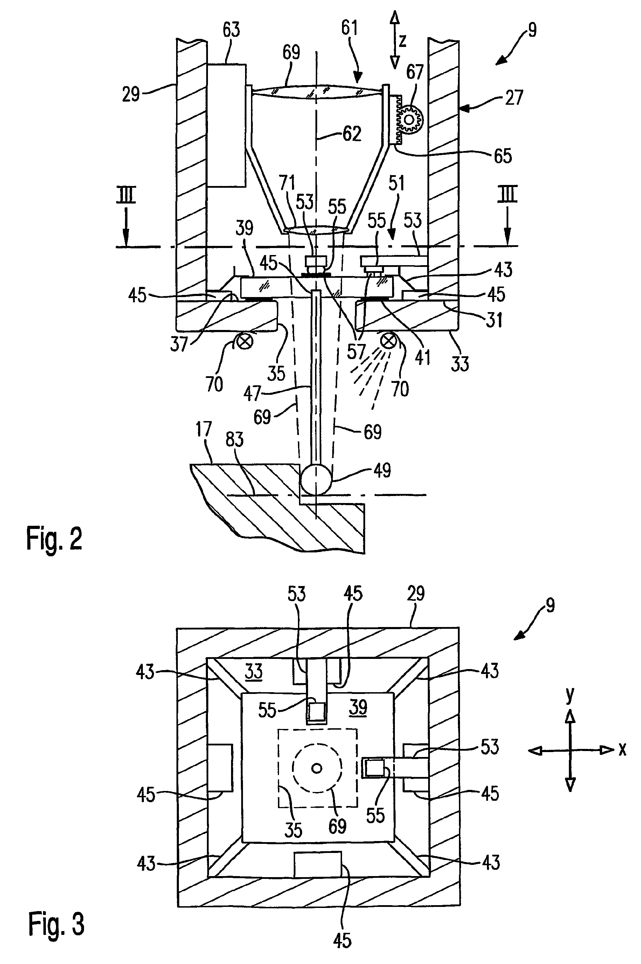

Die Figuren 2 und 3 zeigen einen Tastkopf 9 im Detail, welcher nachfolgend zur Erläuterung von Aspekten der Erfindung beschrieben wird. Der Tastkopf 9 umfaßt eine Tastkopfchassis 27 aus einem Rohr 29 mit Rechteckquerschnitt sowie einer an einem Stirnende 31 des Rohrs 29 angebrachten Grundplatte 33. Das dem Stirnende 31 entgegengesetzte Ende des Rohrs 29 ist fest an der Tastkopfhalterung 7 des Koordinatenmeßgerätes 1 angebracht, womit auch das Chassis 27 fest an dem Tastkopfträger 7 gehaltert ist.

Die im Betrieb des Koordinatenmeßgerätes 1 horizontal ausgerichtete Grundplatte 33 weist eine zentrale quadratische Ausnehmung 35 auf, deren Umfangswände mit Abstand von Innenwänden des Rohrs 29 angeordnet sind. Auf einer Oberseite 37 der Grundplatte 33 liegt eine Glasplatte 39 in Horizontalrichtung verschiebbar auf. Um einen Reibwiderstand gegenüber Verschiebung der Glasplatte 39 relativ zu der Grundplatte 33 zu vermindern, ist zwischen der Grundplatte 33 und der Glasplatte 39 ein Ölfilm 41 vorgesehen, der sich ringförmig um die Ausnehmung 35 herum erstreckt.

Die Glasplatte 39 ist auf der Grundplatte 33 und innerhalb des Rohres 29 mittels Federn 43 in einer zentralen Ruhestellung gehalten, wobei eine jede Feder 43 mit ihrem einen Ende in einer Ecke des Rohrs 29 an der Grundplatte 33 und mit ihrem anderen Ende an einer entsprechenden oberen Ecke der Glasplatte 39 festgemacht ist.

Gegen eine Rückstellkraft der Federn 43 ist die Glasplatte 39 horizontal aus ihrer Ruhestellung heraus verlagerbar, wobei vier Anschläge 45 diese horizontale Verlagerung beschränken. Die Anschläge 45 sind als Klötzchen ausgebildet, die mit ihren Unterseiten auf der Grundplatte 33 aufliegen und mit ihren Seiten an den Innenwänden des Rohrs 29 anliegen, wobei die Anschläge 45 jeweils mittig an den Innenwänden des Rohrs 29 angeordnet sind.

Im Zentrum der Glasplatte 39 ist eine Bohrung 45 von der Unterseite der Glasplatte 39 her eingebracht, in welche ein Ende bzw. ein Fuß eines Taststiftes. 47 eingeklebt ist. An dem anderen nicht an der Glasplatte 39 festgemachten Ende des Taststiftes 47 trägt dieser eine Rubinkugel 49, welche die Tastspitze des Koordinatenmeßgerätes 1 bildet und welche zum Antasten des Werkstücks 17 in Berührungskontakt mit dessen Oberfläche zu bringen ist.

Gelangt die Tastspitze 49 durch Verfahren des Tastkopfes 9 relativ zu dem Werkstück 17 in seitlichen Kontakt mit dessen Oberfläche, so resultiert daraus eine Andruckkraft, welche entgegen der Wirkung der Federn 43 zu einer horizontalen Verlagerung der Glasplatte 39 aus ihrer Ruhelage bezüglich des Chassis 27 des Tastkopfes 9 führt.

Die Auslenkung der Platte 39 aus der Ruhelage ist mittels eines Auslenkungsmeßsystemes 51 bestimmbar. Dieses umfaßt zwei Sensorträger 53, welche jeweils mittig an zwei benachbarten Seitenwänden des Rohrs 29 festgemacht sind und horizontal über die Glasplatte 39 ragen. Ein jeder Sensorträger 53 trägt an seiner Unterseite einen optischen Sensor 55 derart, daß er mit geringem Abstand über der Oberfläche der Glasplatte 39 angeordnet ist. Auf der Oberseite der Glasplatte 39 sind in Bereichen unterhalb der Sensoren 55 Strichmarkierungen 57 vorgesehen, welche jeweils von den Sensoren 55 optisch abgetastet werden. Eine Verlagerung der Glasplatte 39 und damit der Strichmarkierungen 57 wird von den Sensoren 55 erfaßt und in ein entsprechendes Meßsignal umgewandelt, worüber eine zentrale Steuerung des Koordinatenmeßgerätes 1 die Auslenkung der Glasplatte 39 aus der Ruhelage dem Werte nach erfassen kann.

Die Beobachtungsoptik 21 umfaßt neben dem Okular 23 und dem Kameraaufsatz 25 (Figur 1) noch ein Objektiv 61, welches über eine im Inneren des Rohrs 29 festgemachte Verschiebehalterung 63 an dem Chassis 27 gehalten ist. Hierbei ist das Objektiv 61 bezüglich des Chassis 27 in z-Richtung durch einen Antrieb verlagerbar, der eine an dem Objektiv 61 festgelegt Zahnstange 65 und ein darin eingreifendes von außen betätigbares Antriebsritzel 67 umfaßt.

Das Objektiv 61 umfaßt eine dem Okular 23 zuweisende Austrittslinse 69 und eine der Tastspitze 49 zuweisende Eintrittslinse 71, welche innerhalb des Rohrs 29 und oberhalb der Glasplatte 39 angeordnet ist. Der Antrieb 65, 67 dient dazu, die Lage einer Objektebene 83 des Objektives 61 auf eine Länge des gerade eingesetzten Taststiftes 47 einzustellen, wobei ein Benutzer die Position des Objektives 61 in z-Richtung derart einstellen wird, daß die Objektebene 83 im Bereich der Tastspitze 49 oder etwas darunter angeordnet ist.

Die Betrachtung der Objektebene bzw. der Tastspitze 49 erfolgt mit dem Objektiv 61 durch die Glasplatte 39 hindurch. Hierbei sind Teile des Taststiftes und bei dem illustrativen Beispiel gemäß Figur 2 der gesamte Taststift 47 und sein Fuß 45, der an der Glasplatte 39 festgelegt ist, innerhalb des Strahlenganges des Objektives 61 angeordnet. Dies wird auch daraus ersichtlich, daß Randstrahlen des Strahlenganges, d.h. Strahlen die am weitesten dezentral in die Eintrittslinse 71 des Objektives 61 eintreten und die in den Figuren 2 und 3 mit dem Bezugzeichen 69 versehen sind, den Taststift 47 und den Ort 45, an dem dieser an der Glasplatte 39 gehaltert ist, in der x-y-Ebene umgreifen. Obwohl Strukturen und nicht durchsichtige Komponenten des Tastkopfes 9, wie etwa der Fuß 45 des Taststiftes 47, innerhalb des Strahlenganges des Objektives 61 angeordnet sind und Eingangsstrahlen des Objektives teilweise abschatten, liefert das Objektiv 61 gleichwohl ein für den Beobachter gut erkennbares Bild der Objektebene des Objektives.

In Figur 2 ist schematisch weiter noch eine Beleuchtung 70 zur Beleuchtung einer Umgebung der Taststiftspitze 49 dargestellt.

Insgesamt ist mit der Anordnung des Objektives 61 innerhalb des Chassis 27 derart, daß tragende Strukturen von dem Strahlengang des Objektives durchsetzt werden, ein kompakter Aufbau für einen Tastkopf mit Beobachtungsoptik geschaffen. Die tragende Struktur, die von dem Strahlengang durchsetzt wird, ist die Glasplatte 39, welche die Funktion einer bezüglich des Chassis aus einer Ruhelage verlagerbaren Taststifthalterung übernimmt.

Nachfolgend werden Varianten der Erfindung erläutert. Hierbei sind ihrer Funktion einander entsprechende Komponenten mit den Bezugszahlen der Figuren 1 bis 3, zur Unterscheidung jedoch mit einem zusätzlichen Buchstaben versehen. Zur Erläuterung wird auf die gesamte vorangehende Beschreibung Bezug genommen.

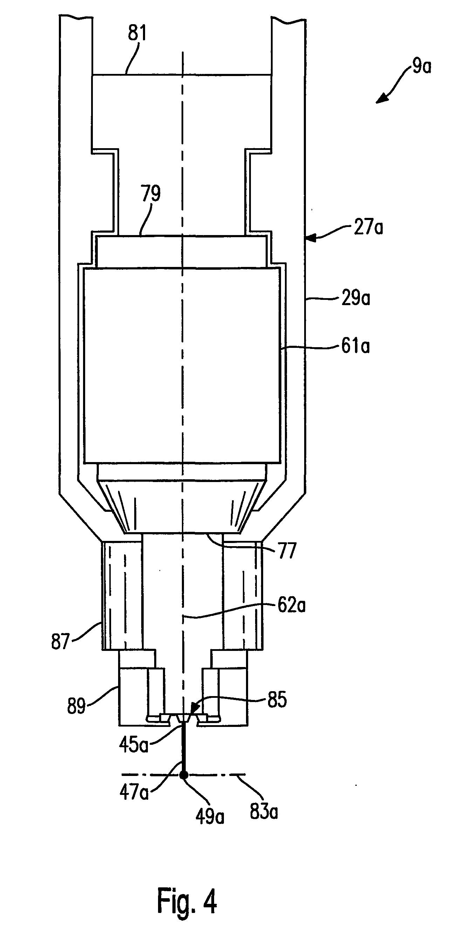

Figur 4 zeigt einen Tastkopf 9a mit einem Chassis 27a, welches an einem Koordinatenmeßgerät anbringbar ist, wie es beispielsweise in Figur 1 gezeigt ist. Das Chassis 27a weist als Haltestruktur für weitere Komponenten ein Rohr 29a auf, welches in seinem Inneren ein Objektiv 61a mit einer einer Objektebene 83a zuweisenden Eingangsseite 77 und einer dieser gegenüberliegenden Ausgangsseite 79 aufweist, an welche direkt eine Kamera 81 angeschlossen ist.

In der Objektebene 83a ist eine Spitze 49a eines Taststiftes 47a angeordnet, welcher mit seinem anderen Ende 45a an einem Sensorsystem 85 befestigt ist.

Das Sensorsystem 85 ist ebenfalls an dem Chassis 27a gehalten, indem an dem vorderen Ende des Rohrs 29a eine Distanzhülse 87 angebracht ist, welche eine ringförmige Halterung 89 für das Sensorsystem 85 trägt und dieses derart vor dem Objektiv 61a anordnet, daß die Erstreckungsrichtung des Taststiftes 47a mit der optischen Achse 62a des Objektives 61a im wesentlichen zusammenfällt.

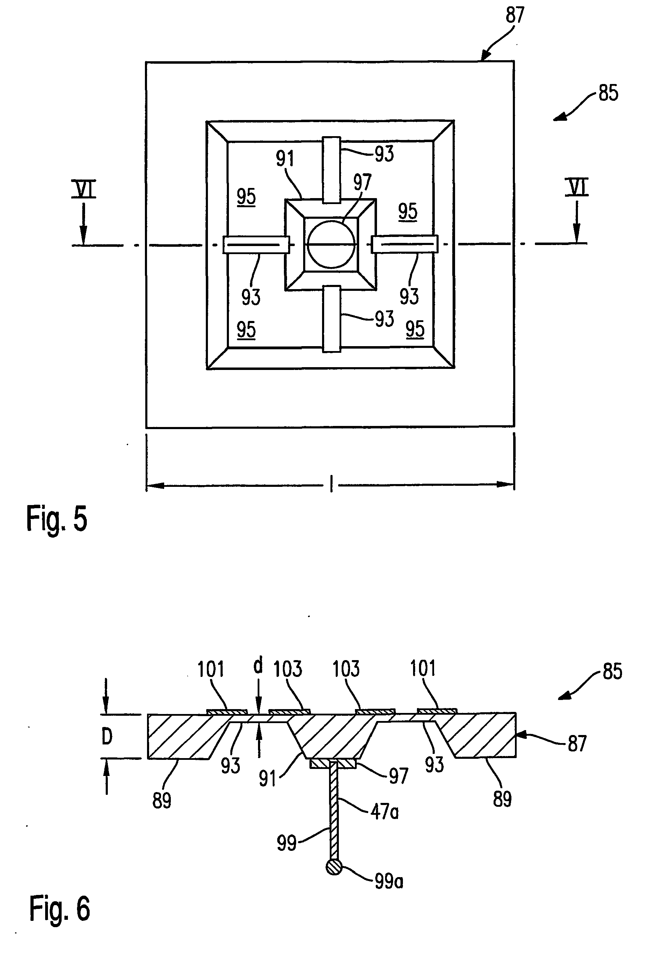

Das Sensorsystem 85 ist in den Figuren 5 und 6 im Detail dargestellt.

Es umfaßt einen Körper 87 aus einem Silizium-Einkristall, dessen (100)-Ebene in der Zeichenebene der Figur 5 liegt, und die Struktur des Siliziumkörpers 87 wurde aus einem Vollkörper durch Ätzen gefertigt.

Ein Außenumfang des Silizumteils 87 ist durch ein quadratisches Rahmenteil 89 gebildet. Bei dem hier beschriebenen Ausführungsbeispiel weist das Rahmenteil eine Kantenlänge 1 von 6mm auf, und eine Profildicke D des Rahmens 89 beträgt 0,5mm. Es können jedoch auch größere oder kleinere Abmessungen für das Rahmenteil eingesetzt werden.

Eine Taststifthalterung 91 ist zentral in dem Rahmen 89 an vier Streifen 93 aufgehängt, die sich jeweils mittig an Seiten des Rahmens 89 nach innen erstrecken (in der Draufsicht der Figur 5). Beidseits eines jeden Haltestreifens 93 ist eine Ausnehmung 95 vorgesehen, welche den Durchtritt von Lichtstrahlen aus der Objektebene 83a zu der Eintrittsseite 77 des Objektives 61a erlauben. Eine jede Ausnehmung 95 ist in der Zeichenebene der Figur 5 durch zwei Seiten des Rahmens 89, durch zwei Streifen 93 und die Taststifthalterung 91 begrenzt.

Die Streifen 93 weisen bei dem beschriebenen Ausführungsbeispiel im Vergleich zu der Profildicke D des Rahmens 89 eine wesentlich geringere Dicke d von 30μm und damit bereits bei vergleichsweise geringen Biegekräften eine merkliche elastische Deformierbarkeit auf. Somit ist die Taststifthalterung 91 über die Streifen 93 in dem Rahmen 89 in einer Ruhelage gehalten, aus der sie elastisch auslenkbar ist. Auch für die Dicke d können größere oder kleinere Werte eingesetzt werden.

Der Taststift 47a weist einen auf der Taststifthalterung 91 aufgeklebten Fuß 97 mit einem Durchmesser von 1mm auf, in den ein Schaft 99 mit einer Dicke von 0,2mm und einer Länge von 8mm eingesteckt ist und dessen Ende die Rubinkugel 49a mit einem Durchmesser 0,3mm trägt. Auch hier sind die Abmessungen des Taststifts 47a lediglich beispielhaft angegeben, und es können auch andere Werte eingesetzt werden.

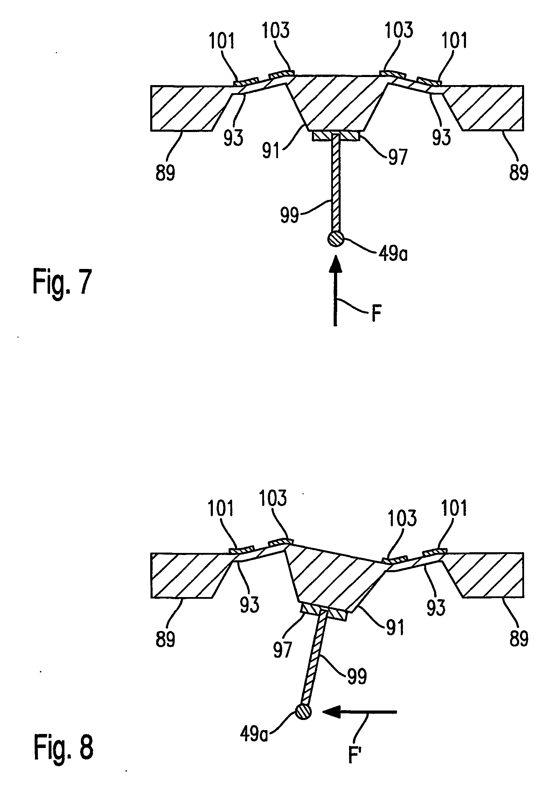

Auf einer von der Tastspitze 49a wegweisenden Fläche eines jeden Streifens 93 sind zwei Dehnmeßstreifen bzw. Piezowiderstände aufgebracht, nämlich ein Widerstand 101, der sich von einem dem Streifen 93 nahen Bereich des Rahmens 89 bis in einen dem Rahmen 89 nahen Bereich des Streifens 93 erstreckt, und einen weiteren Widerstand 103, der sich von einem der Taststifthalterung 91 nahen Bereich des Streifens 93 bis in einen dem Streifen 93 nahen Bereich der Taststifthalterung 91 erstreckt. Mit diesen insgesamt 8 Dehnmeßstreifen 101, 103, deren elektrische Verschaltung in den Figuren 5 und 6 nicht dargestellt ist, kann die Auslenkung der Taststifthalterung 91 aus der in den Figuren 5 und 6 gezeigten Ruhelage mittels einer in den Figuren ebenfalls nicht dargestellten Steuerung erfaßt werden, wie dies aus den Figuren 7 und 8 näher hervorgeht.

Figur 7 zeigt eine Situation, in der auf die Tastspitze 49a eine Kraft F wirkt, die in Erstreckungsrichtung des Schaftes 99 orientiert ist. Wie aus Figur 7 ersichtlich ist, führt dies zu einer Dehnung der der Taststifthalterung 91 nahen Dehnmeßstreifen 103 sowie zu einer Kompression der anderen dem Rahmen 89 nahen Streifen 101.

In Figur 8 ist eine Situation dargestellt, in der auf die Tastspitze 49a eine Kraft F' wirkt, die senkrecht zur Erstreckungsrichtung des Schaftes 99 gerichtet ist. Dies führt dazu, daß von den in Figur 8 gezeigten rahmennahen Streifen 101 und taststifthalterungsnahen Streifen 103 jeweils einer komprimiert und einer gedehnt wird, wobei von den Dehnmeßstreifen 101, 103 eines jeden Haltestreifens 93 jeweils einer komprimiert und der andere gedehnt wird.

Durch Auslesen der von den Dehnmeßstreifen 101, 103 bereitgestellten Meßsignale und Auswertung derselben ist die auf die Tastspitze 49a einwirkende Kraft sowohl hinsichtlich ihres Betrages als auch ihrer Richtung ableitbar.

Der Sensor hat somit zum einen die Funktion, den Taststift 47a gegenüber dem Chassis verlagerbar zu halten, und zum anderen hat er die Funktion, die Auslenkung der Taststifthalterung 91 bezüglich des Chassis zu messen. Hierzu sind die Sensorkomponenten 91 und 89 über die Haltestreifen 93 elastisch miteinander verbunden. Die Komponente 91 dient als unmittelbare Halterung für den Taststift, und der Rahmen 89 ist mit dem übrigen Chassis 27a des Tastkopfes 9a fest verbunden und kann hinsichtlich seiner mechanischen Funktion dem Chassis 27a zugerechnet werden. Die Streifen 93 bilden zusammen einen Querträger, der die Taststifthalterung 91 und das Chassis 27a bzw. den Rahmen 89 miteinander verbindet und sich quer zur Erstreckungsrichtung des Schaftes 99 erstreckt. Der somit gebildete Querträger weist mehrere Ausnehmungen 95 auf, so daß er bereichsweise lichtdurchlässig ausgestaltet ist, um eine Beobachtung der Tastspitze 49a mit dem Objektiv 61a zu ermöglichen, wobei der Querträger 93 zwischen der Tastspitze 49a und der Eingangsseite 77 des Objekives 61a angeordnet ist.

Alternativ zu der Aufbringung von Dehnmeßstreifen auf die Streifen 93 auf deren von der Tastspitze 49a wegweisenden Seite ist es auch möglich, die Dehnmeßstreifen auf die der Tastspitze 49a zuweisenden Seite anzubringen. Ebenso ist es möglich, den Dehnungssensor durch direktes Dotieren der Streifen 93 oder diesen benachbarter Bereiche des Rahmenteils 89 auszubilden. Hierbei werden geeignete Dotierstoffe in einer derartigen Konzentration in das Silizium eingebracht, daß dieses einen piezoelektrischen Effekt zeigt.

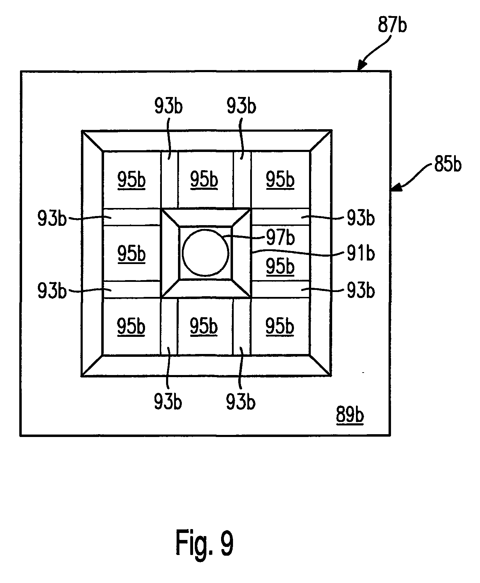

Figur 9 zeigt eine Variante des in den Figuren 5 und 6 gezeigten Sensorsystemes, wobei ein Siliziumkörper 87b der Figur 9 sich von dem in den Figuren 5 und 6 gezeigten dadurch unterscheidet, daß hier ein Taststifthalter 91b mit acht dünnen Haltestreifen 93b an einem Rahmenteil 89b des Sensorsystemes 85b gehaltert ist. Zwischen einem jeden Paar von benachbarten Haltestreifen 93b ist wiederum eine Ausnehmung 95b vorgesehen, um den Lichtdurchtritt zur Beobachtung einer Objektebene mittels Objektiv zu ermöglichen.

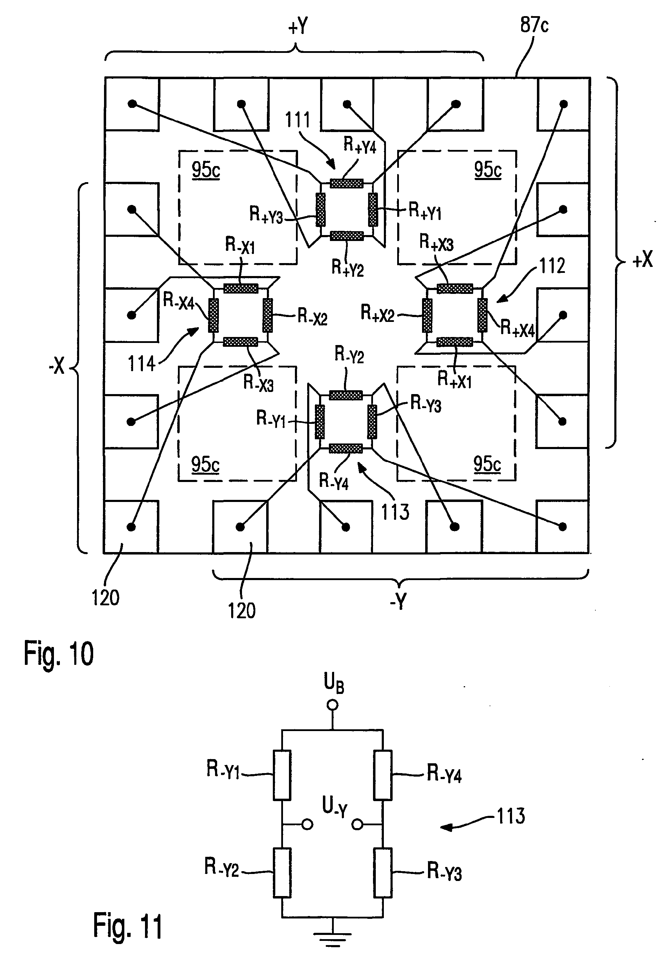

Figuren 10 und 11 zeigen eine weitere Variante des in den Figuren 5 und 6 gezeigten Sensorsystems, wobei hier eine Auslegung der Sensoren als Meßbrücken im Detail erläutert ist. Ausnehmungen 95c in einem Siliziumchip 87c sind in Figur 10 lediglich mit gestrichelten Linien dargestellt. In einem Zentrum des Siliziumchips 87c ist eine in Figur 10 nicht dargestellte Tastspitze festgemacht.

Der Siliziumchip 87c weist an seinen Rändern verteilt sechzehn contact pads bzw. elektrische Anschlußbereiche auf. Zur Messung von Deformationen in dem Siliziumchip sind darauf vier Vollmeßbrücken 111, 112, 113 und 114 angeordnet, deren Widerstände durch lokales Dotieren des Siliziums des Siliziumchips 87c oder anderer Techniken gebildet sind, und welche durch in Figur 10 schematische Leitungsführungen mit den Anschlüssen 120 verbunden sind, wobei diese Leitungsführungen ebenfalls durch Dotieren oder andere herkömmliche Technologien realisiert sind.

Eine der Meßbrücken, nämlich die Meßbrücke 113 ist in Figur 11 im Detail dargestellt. Diese dient zur Gewinnung eines mit "-Y" bezeichneten Signals. Sie umfaßt vier Widerstände $R_{-Y1}$, $R_{-Y2}$, $R_{-Y3}$ und $R_{-Y4}$, wobei zwischen den Widerständen $R_{-Y2}$ und $R_{-Y3}$ ein Masseanschluß vorgesehen ist, ein Anschluß für eine Betriebsspannung $U_B$ zwischen den Widerständen $R_{-Y1}$ und $R_{-Y4}$ vorgesehen ist und ein Meßsignal $U_{-Y}$ zwischen den Widerständen $R_{-Y1}$ und $R_{-Y2}$ einerseits und $R_{-Y3}$ und $R_{-Y4}$ andererseits abgegriffen wird.

Die anderen Meßbrücken 112, 111 und 114 sind entsprechend für den Abgriff von Signalen "+X", "+Y" und "-X" vorgesehen und liefern entsprechende Spannungssignale $U_{+X}$, $U_{+Y}$ und $U_{-X}$.

Aus den von den Meßbrücken 111, 112, 113 und 114 abgegriffenen Signalen $U_{+Y}$, $U_{+X}$, $U_{-Y}$ und $U_{-X}$ werden die Größen $Y_S$, $X_S$ und $Z_S$ nach folgender Formel errechnet:

$$Y_S = U_{+Y} - U_{-Y}$$

$$X_S = U_{+X} - U_{-X}$$

$$Z_S = U_{+X} + U_{-X} + U_{+Y} + U_{-Y}$$

Die Signale $Y_S$, $X_S$ und $Z_S$ repräsentieren Auslenkungen der Tastspitze in die Richtungen y, x bzw. z.

Bei den vorangehend beschriebenen Ausführungsformen ist das Auslenkungsmeßsystem dazu in der Lage, die Größe der Auslenkung der Taststifthalterung aus ihrer Ruhelage zu bestimmen. Hierdurch ist es insbesondere möglich, die Tastspitze mit einer vorgegebenen Andruckkraft entlang einer Werkstückoberfläche zu steuern. Es ist jedoch ebenfalls vorgesehen, als Auslenkungsmeßsystem ein schaltendes Meßsystem einzusetzen, welches lediglich zwischen einem Zustand, der eine Berührung der Werkstückoberfläche anzeigt, und einem anderen Zustand, der Nichtberührung der Werkstückoberfläche anzeigt, umschaltet.

Es ist ebenfalls möglich das Meßsystem derart auszulegen, daß der Taststift um eine Ruhelage oszillierend gehalten wird, wobei ein Schwingkreis eine solche Oszillation während des Meßbetriebes aufrecht erhält. Eine Annäherung der Tastspitze an die Werkstückoberfläche oder eine Berührung der Werkstückoberfläche durch die Tastspitze führt zu einer Bedämpfung und gegebenenfalls Frequenzverschiebung der Oszillation, welche ebenfalls erfaßt werden kann.

In den vorangehenden Ausführungsbeispielen erstreckt sich der Taststift jeweils im wesentlichen auf der optischen Achse der Beobachtungsoptik. Es ist jedoch ebenfalls möglich, die optische Achse der Beobachtungsoptik versetzt zur Erstreckungsrichtung des Taststiftes anzuordnen oder einen geknickten oder gebogenen Taststift mit zwei oder mehreren Erstreckungsrichtungen zu verwenden. Wesentlich für die Erfindung ist hierbei, daß die Beobachtungsoptik die Taststiftspitze durch eine halternde Struktur für den Taststift "hindurch" beobachtet.

**Patentansprüche**

1. Tastkopf für ein Koordinatenmeßgerät (1), umfassend:

ein an dem Koordinatenmeßgerät (1) anbringbares Tastkopfchassis (27),
eine an dem Tastkopfchassis (27) aus einer Ruhelage auslenkbar gehalterte Taststifthalterung (91), an der ein Taststift (47a) zur Antastung eines Werkstücks (17) anbringbar ist,
ein Auslerikungsmeßsystem (101, 103) zur Erfassung einer Auslenkung der Taststifthalterung (39; 91) bezüglich des Tastkopfchassis (27), und
eine von dem Auslenkungsmeßsystem (101, 103) separate Beobachtungsoptik (61) zur Beobachtung einer Spitze (49) des Taststiftes (47) und einer Umgebung derselben,
wobei der Tastkopf so ausgelegt ist, dass ein Durchmesser der beobachteten Umgebung mehr als ein Fünffaches eines Durchmessers eines Berührkörpers der Spitze (49) beträgt,
wobei wenigstens eine der Komponenten Taststifthalterung (91) und Tastkopfchassis (27) einen sich quer zur Erstreckungsrichtung des Taststiftes (47) erstreckenden Querträger (93) aufweist, welcher wenigstens bereichsweise lichtdurchlässig ist und im Strahlengang (69) der Beobachtungsoptik (61) angeordnet ist,
wobei der Querträger (93) mehrere Ausnehmungen (95) für einen Lichtdurchtritt von einer Objektebene (83a) der Beobachtungsoptik (61a) zu einer Eingangsseite (77) der Beobachtungsoptik (61a) aufweist, und wobei der Querträger (93) mehrere Materialstreifen (93) aufweist,
wobei der Querträger (93) elastisch deformierbar ist und das Tastkopfchassis (27) und die Taststifthalterung (91) elastisch miteinander verbindet;

**gekennzeichnet durch** Dehnungssensoren, welche an den Materialstreifen vorgesehen sind, wobei das Auslenkungsmeßsystem (101, 103) so ausgebildet ist, dass es elastische Deformationen des Querträgers (93) **durch** die Dehnungssensoren registriert.

2. Tastkopf nach Anspruch 1, wobei der Taststift (47) an der Taststifthalterung (91) angebracht ist und eine Objektebene (83) der Beobachtungsoptik in einem Bereich der Spitze (49) des Tastsiftes (47) angeordnet ist.

3. Tastkopf nach Anspruch 2, wobei ein erster Abstand D1 zwischen dem Querträger (93) und der Objektebene (83) und ein zweiter Abstand D2 zwischen dem Querträger (93) und der Spitze (49) des Tastsiftes (47) folgende Relation erfüllen: $0,5 < |D1/D2| < 2,0$, vorzugsweise $0,75 < |D1/D2| < 1,4$ und weiter bevorzugt $0,85 < |D1/D2| < 1,2$.

4. Tastkopf nach einem der Ansprüche 1 bis 3, wobei der Querträger (93) zwischen einer Objektivlinse (77) der Beobachtungsoptik (61) und einer Spitze (49) des Taststiftes (47) angeordnet ist.

5. Tastkopf nach einem der Ansprüche 1 bis 4, wobei der Querträger (39) aus einem durchsichtigen Material, insbesondere aus Glas, gefertigt ist.

6. Tastkopf nach einem der Ansprüche 1 bis 5, wobei mehrere in Umfangsrichtung um eine Längsachse (62a) des Tastsiftes (47a) verteilt angeordnete Ausnehmungen (95a) vorgesehen sind.

7. Tastkopf nach einem der Ansprüche 1 bis 6, wobei die Taststifthalterung (45; 91) oder/und ein Verbindungsbereich (93) zwischen Taststifthalterung (91) und Tastkopfchassis (27), innerhalb des Strahlengangs (69) der Beobachtungsoptik (61) angeordnet ist.

8. Tastkopf nach einem der Ansprüche 1 bis 7, wobei sich der Taststift (47) im wesentlichen entlang einer Hauptachse (62) der Beobachtungsoptik (61) erstreckt.

9. Tastkopf nach einem der vorangehenden Ansprüche, wobei der Querträger (93), eine an dem Tastkopfchassis (27a) gehaltene Komponente (89) des Auslenkungsmeßsystems (101,103) und eine Komponente (91) der Taststifthalterung (91) integral aus einem Materialblock (87), insbesondere aus einem Einkristall, gefertigt sind.

10. Tastkopf nach einem der vorangehenden Ansprüche, wobei der Dehnungssensor ein Dehnungssensor aus einem piezoelektrischen Material oder/und einen Dehnmeßstreifen (101, 103) aufweist.

11. Koordinatenmeßgerät mit einer Werkstückhalterung (15) und einem bezüglich der Werkstückhalterung (15) räumlich verfahrbaren Tastkopf (9) nach einem der Ansprüche 1 bis 10 zum Antasten eines an der Werkstückhalterung (15) anbringbaren Werkstücks (17).

12. Verfahren zum Antasten eines Werkstückes (17), umfassend:

ein Koordinatenmeßgerät (1) nach Anspruch 11 mit an dessen Taststifthalterung (39, 91) angebrachtem Taststift (47) bereitzustellen,
den Tastkopf (9) relativ zu dem Werkstück (17) räumlich insbesondere schrittweise zu verfahren, um die Spitze (49) des Taststifts (47) an einer gewünschten Stelle in Kontakt mit dem Werkstück (17) zu bringen,
eine Benutzerbeobachtung der Lage der Spitze (49) des Taststiftes (17) bezüglich des Werkstückes mittels der Beobachtungsoptik (21, 61) während des Verfahrens zu ermöglichen,
einen Verfahrweg des Tastkopfes (9) relativ zu dem Werkstück (17) in Abhängigkeit von wenigstens einer Benutzereingabe zu ändern.

**Claims**

1. A touch probe for a coordinate measuring apparatus (1), comprising:

a touch probe chassis (27) adapted to be attached to the coordinate measuring apparatus (1),
a sensing stylus support (91) which is mounted on the touch probe chassis (27) so as to be deflectable out of a rest position and on which a sensing stylus (47a) is mountable for contacting a workpiece (17),
a deflection measuring system (101, 103) for detecting a deflection of the sensing stylus support (39; 91) with respect to the touch probe chassis (27), and
an inspection optics (61), which is provided separate from the deflection measuring system (101, 103), for inspecting a tip (49) of the sensing stylus (47) and a surrounding of the tip (49), wherein the touch probe is configured such that a diameter of the inspected surrounding is more than five times the diameter of a contact body of the tip (49),
wherein at least one of the components sensing stylus support (91) and touch probe chassis (27) comprises a transverse support (93) which extends transversely to the direction of extension of the sensing stylus (47) and which is transparent to light in at least a portion thereof and which is disposed in the beam path (69) of the inspection optics (61), wherein the transverse support (93) comprises several apertures (95) for a passage of light from an object plane (83a) of the inspection optics (61a) to an entrance side (77) of the inspection optics (61a), and wherein the transverse support (93) comprises a plurality of material strips (93),
wherein the transverse support (93) is elastically deformable and elastically couples the touch probe chassis (27) and the sensing stylus support (91),
**characterized by** strain sensors provided at the material strips, said deflection measuring system (101, 103) being configured so as to detect elastic deformations of the transverse support (93) by means of the strain seonsors.

2. The touch probe according to claim 1, wherein the sensing stylus (47) is mounted on the sensing stylus support (91), and wherein an object plane (83) of the inspection optics is disposed in a region of the tip (49) of the sensing stylus (47).

3. The touch probe according to claim 2, wherein a first distance D1 between the transverse support (93) and the object plane (83), and a second distance D2 between the transverse support (93) and the tip (49) of the sensing stylus (47) satisfy the following relation: 0.5 < |D1/D2| < 2.0; preferably 0.75 < |D1/D2| < 1.4; and, more preferably, 0.85 < |D1/D2| < 1.2.

4. The touch probe according to one of claims 1 to 3, wherein the transverse support (93) is disposed between an objective lens (77) of the inspection optics (61) and a tip (49) of the sensing stylus (47).

5. The touch probe according to one of claims 1 to 4, wherein the transverse support (39) is made of a transparent material, in particular, of glass.

6. The touch probe according to one of claims 1 to 5, wherein a plurality of apertures (95a) are provided which are distributed in circumferential direction about a longitudinal axis (62a) of the sensing stylus (47a).

7. The touch probe according to one of claims 1 to 6, wherein the sensing stylus support (45; 91) or/and a connecting region (93) between the sensing stylus support (91) and the touch probe chassis (27) are disposed within the beam path (69) of the inspection optics (61).

8. The touch probe according to one of claims 1 to 7, wherein the sensing stylus (47) extends substantially along a main axis (62) of the inspection optics (61).

9. The touch probe according to one of the preceding claims, wherein the transverse support (93), a component (89) of the defelction measuring system (101, 103), said component being mounted on the touch probe chassis (27a), and a component (91) of the sensing stylus support (91) are integrally made from one block of material (87), in particular, from a monocrystal.

10. The touch probe according to one of the preceding claims, wherein the strain sensor is a strain sensor made of a piezoelectric material or/and comprises a strain gauge (101, 103).

11. A coordinate measuring apparatus comprising a workpiece mount (15) and a touch probe (9) according to one of claims 1 to 10, which touch probe is movable in space with respect to the workpiece mount (15) and is adapted for contacting a workpiece (17) mountable on the workpiece mount (15).

12. A method of contacting a workpiece (17), comprising:

   providing a coordinate measuring apparatus (1) according to claim 11 having a sensing stylus (47) mounted on the sensing stylus support (39, 91) thereof,
   moving the touch probe (9) relative to the workpiece (17) in space, in particular, step-by-step, to bring the tip (49) of the sensing stylus (47) into contact with the workpiece (17) at a desired location,
   enabling, during the movement, a user inspection of the position of the tip (49) of the sensing stylus (17) with respect to the workpiece by means of the inspection optics (21, 61),
   changing a travel path of the touch probe (9) relative to the workpiece (17) in dependence upon at least one user input.

**Revendications**

1. Tête de palpage pour un appareil de mesure de coordonnées (1), comprenant :

un châssis de tête de palpage (27) pouvant être fixé au niveau de l'appareil de mesure de coordonnées (1),

un support de palpeur (91) monté au niveau du châssis de tête de palpage (27) et pouvant dévier depuis une position de repos, auquel peut être fixé un palpeur (47a) en vue de palper une pièce à usiner (17),

un système de mesure de déplacement (101, 103) destiné à détecter tout déplacement du support de palpeur (39; 91) par rapport au châssis de tête de palpage (27), et

une optique d'observation (61) séparée du système de mesure de déplacement (101, 103) destinée à observer la pointe (49) du palpeur (47) et son voisinage,

la tête de palpage étant réalisée de telle façon que le diamètre de l'environnement observé est supérieur à cinq fois le diamètre d'un corps de contact de la pointe (49),

au moins l'un des composants support de palpeur (91) et châssis de tête de palpage (27) présentant une traverse (93) s'étendant transversalement au sens d'extension du palpeur (47), laquelle traverse est au moins par endroits transparente et est agencée dans la trajectoire de faisceau (69) de l'optique d'observation (61), la traverse (93) présentant plusieurs évidements (95) pour permettre le passage de la lumière depuis un plan objet (83a) de l'optique d'observation (61a) vers un côté entrée (77) de l'optique d'observation (61a), et la traverse (93) présentant plusieurs bandes de matériau (93), la traverse (93) étant déformable élastiquement et le châssis de tête de palpage (27) et le support de palpeur (91) étant reliés entre eux élastiquement,

**caractérisée par** des capteurs d'allongement, lesquels sont prévus au niveau des bandes de matériau, le système de mesure de déplacement (101, 103) étant conçu de façon à enregistrer les déformations élastiques de la traverse (93) par le biais des capteurs d'allongement.

2. Tête de palpage selon la revendication 1, dans laquelle le palpeur (47) est monté au niveau du support de palpeur (91) et un plan objet (83) de l'optique d'observation est agencé dans la zone de la pointe (49) du palpeur (47).

3. Tête de palpage selon la revendication 2, dans laquelle une première distance D1 entre la traverse (93) et le plan objet (83), et une deuxième distance D2 entre la traverse (93) et la pointe (49) du palpeur (47) répondent à la relation suivante : $0,5 < D1/D2 < 2,0$, de préférence $0,75 < D1/D2 < 1,4$, et de façon davantage préférée $0,85 < D1/D2 < 1,2$.

4. Tête de palpage selon l'une des revendications 1 à 3, dans laquelle la traverse (93) est agencée entre une lentille d'objectif (77) de l'optique d'observation (61) et une pointe (49) du palpeur (47).

5. Tête de palpage selon l'une des revendications 1 à 4, dans laquelle la traverse (39) est réalisée dans un matériau transparent, en particulier en verre.

6. Tête de palpage selon l'une des revendications 1 à 5, dans laquelle il est prévu plusieurs évidements (95a) agencés répartis dans le sens circonférentiel autour d'un axe longitudinal (62a) du palpeur (47a).

7. Tête de palpage selon l'une des revendications 1 à 6, dans laquelle le support de palpeur (45; 91) et/ou une zone de liaison (93) est agencé(e) entre le support de palpeur (91) et le châssis de tête de palpage (27), dans la trajectoire de faisceau (69) de l'optique d'observation (61).

8. Tête de palpage selon l'une des revendications 1 à 7, dans laquelle le palpeur (47) s'étend principalement le long d'un axe principal (62) de l'optique d'observation (61).

9. Tête de palpage selon l'une des revendications précédentes, dans laquelle la traverse (93), un composant (89) du système de mesure de déplacement (101, 103) monté au niveau du châssis de tête de palpage (27a) et un composant (91) du support de palpeur (91) sont réalisés intégralement à partir d'un bloc de matériau (87), en particulier en monocristal.

10. Tête de palpage selon l'une des revendications précédentes, dans laquelle le capteur d'allongement présente un capteur d'allongement en matériau piézoélectrique et/ou une jauge d'allongement (101, 103).

11. Appareil de mesure de coordonnées comprenant un support de pièce à usiner (15) et une tête de palpage (9) mobile par rapport au support de pièce à usiner (15) selon l'une des revendications 1 à 10, en vue de palper une pièce à usiner (17) pouvant être montée au niveau du support de pièce à usiner (15).

12. Procédé pour palper une pièce à usiner (17), comprenant les étapes consistant à :

préparer un appareil de mesure de coordonnées (1) selon la revendication 11 avec un palpeur (47) fixé à son support de palpeur (39, 91), déplacer de façon très progressive la tête de palpage (9) par rapport à la pièce à usiner (17), afin d'amener la pointe (49) du palpeur (47) à un endroit souhaité en contact avec la pièce à usiner (17),

permettre à l'utilisateur d'observer la position de la pointe (49) du palpeur (17) vis-à-vis de la pièce à usiner au moyen de l'optique d'observation (21, 61) pendant le processus,

modifier la trajectoire de la tête de palpage (9) par rapport à la pièce à usiner (17) en fonction d'au moins une donnée d'utilisateur.

Fig. 1

Fig. 2

Fig. 3

Fig. 4

Fig. 5

Fig. 6

Fig. 7

Fig. 8

16

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0614517 B1
- EP 0995967 A
- DE 3238951 A1

**In der Beschreibung aufgeführte Nicht-Patentliteratur**

- **Thomas Kleine-Besten et al.** Miniaturisierter 3D-Tastkopfsensor für die Metrologie an Mikrostrukturen. *Technisches Messen,* Dezember 1999, 490-495